# EUROPÄISCHE PATENTSCHRIFT

(11) **EP 2 942 677 B1**
(45) Veröffentlichungstag und Bekanntmachung des Hinweises auf die Patenterteilung: **29.06.2022**
(21) Anmeldenummer: 15162917.7
(22) Anmeldetag: 09.04.2015
(51) Int. Cl.: G05B 15/02, H04L 12/28, G05B 19/042

(54) **SYSTEM DER GEBÄUDEAUTOMATISIERUNG**
BUILDING AUTOMATION SYSTEM
SYSTÈME D'AUTOMATISATION DE BÂTIMENT

(30) Priorität: 09.05.2014 DE 102014106586
(43) Veröffentlichungstag der Anmeldung: 11.11.2015
(73) Patentinhaber: GIRA GIERSIEPEN GmbH & Co. KG, 42477 Radevormwald (DE)
(72) Erfinder: Schmitz, Hans Günter, 42115 Wuppertal (DE); Gediger, Frank, 42278 Wuppertal (DE); Dahms, Severin, 58452 Witten (DE); Nawrocki, Matthias, 41470 Neuss (DE)
(74) Vertreter: Angerhausen, Christoph

(56) Entgegenhaltungen:
- EP-A2- 1 973 208
- WO-A1-2013/145673
- DE-A1-102012 000 380
- US-A1- 2011 248 877

## Beschreibung

Die Erfindung betrifft ein System der Gebäudeautomatisierung, mit einer stationären Schnittstelle für die Kommunikation zwischen einem Benutzer und einem Netzwerk, in dem mindestens ein Gerät, das gebäudeinterne Abläufe verwaltet und abarbeitet, enthalten ist, wobei die stationäre Schnittstelle eine sensitive Fläche und eine Verarbeitungslogik umfasst, die dazu eingerichtet ist, direkt oder indirekt zumindest einen Befehl aufzunehmen und zu verarbeiten, welcher das wenigstens eine Gerät ansteuert, und wobei gekoppelt mit der sensitiven Fläche eine Anzeige- und/oder Informationseinrichtung vorgesehen ist, wobei die sensitive Fläche in eine Gebäudewand integriert oder auf ihr aufgebracht ist, wobei das System weiterhin ein mobiles Gerät aufweist und dazu eingerichtet ist, dass zumindest ein Teil der Konfiguration des wenigstens einen Gerätes drahtlos über das mobile Gerät im Zusammenwirken mit der stationären Schnittstelle erfolgt. Ein derartiges System ist aus der EP 1 973 208 A2 bekannt.

Die Geräte sollen insbesondere Installationsgeräte sein, die über ein an sich bekanntes Busnetzwerk, wie EIB oder KNX, angesteuert werden können. Im einfachsten Fall geschieht die Ansteuerung eines einzelnen Gerätes über das gebäudeinterne 230V-Netzwerk.

Ein ähnliches System ist auch aus der DE 100 00 609 B4 bekannt. Hier ist ein vorkonfiguriertes System der Gebäudeautomatisierung beschrieben, auf das mittels eines Mobiltelefons zugegriffen werden kann, so dass dieses als Steuergerät zum Bedienen jeweils mindestens eines der Installationsgeräte des Busnetzwerks entsprechend der jeweiligen Funktionsstruktur der Installationsgeräte verwendbar ist. Sobald der Benutzer, gegebenenfalls nach einer Freischaltung, über das Mobiltelefon mit der Schnittstelle kommuniziert, erscheint auf dem Display des Mobiltelefons eine Listung verfügbarer Funktionen, die der Benutzer dann steuern kann. Die eigentliche Konfigurierung einzelner Installationsgeräte oder gar des gesamten Systems ist vom Benutzer nicht beeinflussbar.

Es ist die Aufgabe der vorliegenden Erfindung, das bekannte System der Gebäudeautomatisierung zu verbessern, insbesondere im Hinblick auf die Benutzerfreundlichkeit, indem auf eine vereinfachte Konfiguration und Bedienung, aber auch auf Information über Parameter und Abläufe, beispielsweise durch Visualisierung abgestellt wird.

Diese Aufgabe wird durch ein System nach Anspruch 1 gelöst. Vorteilhafte Ausgestaltungen sind Gegenstand der Unteransprüche.

Erfindungsgemäß ist vorgesehen, dass das mobile Gerät ein Smartphone ist, das eine Kamerafunktion aufweist, welche dazu eingerichtet ist, eine berührungslose Gestik des Benutzers zu erfassen und zumindest einen durch die Gestik dargestellten Befehl über eine Funkverbindung an die stationäre Schnittstelle zu übertragen, wobei die Übertragung des zumindest einen Befehls durch die Gestik des Benutzers ausgelöst ist.

"Direkt" meint dabei nicht nur, dass die Bedieneingaben beispielsweise durch unmittelbares Berühren der sensitiven Fläche vorgenommen werden, sondern auch, dass die Eingabe durch Gestik des Benutzers entfernt von der sensitiven Fläche erfolgt.

Die sensitive Fläche kann dabei eine elektrisch-kapazitive Fläche sein, die anhand der elektrischen Kapazität die Position eines oder mehrerer Finger auf der Oberfläche oder in der Nähe der Oberfläche ermittelt. Derartige elektrisch-kapazitive Flächen werden beispielsweise als Touch Pads direkt im Gehäuse von Laptops oder Tastaturen verbaut. Ein weiteres Beispiel einer sensitiven Fläche nutzt die Erkennung von Temperaturänderungen durch Infrarot.

Auch können sensitive Flächen verwendet werden, die die Gestenerkennung über größere Entfernungen ermöglichen, beispielsweise solche, die die Floating-Touch-Technologie nutzen.

Bei dem System kann zumindest ein Teil der Konfiguration eine vom Benutzer selbst bestimmte Bedienungslogik umfassen. Zum Beispiel malt der Benutzer mit seinem Finger ein Symbol auf die sensitive Fläche, das er mit einer Szene verknüpft. So kann ein Schemensatz für die Gebäudesystemsteuerung aufgebaut werden. Er kann auch auf einem berührungsempfindlichen Bildschirm malen, woraufhin das Symbol an die sensitive Fläche übertragen wird. Bei der Bedienung braucht dann nur das Symbol gemalt werden, um bestimmte Temperaturen, Lichteffekte, Musikstücke usw. abzurufen.

Das mobile Gerät wird technisch eingelernt, um Überschneidungen mit anderen, benachbart angeordneten Gebäudeautomatisierungssystemen zu vermeiden.

Die Anzeige- und/oder Informationseinrichtung kann, muss aber nicht, direkt in die sensitive Fläche integriert sein und basiert beispielsweise auf LEDs oder einer anderen elektronischen Anzeige, wobei weiter vorzugsweise auf einfache Struktur Wert gelegt wird, so dass zum Beispiel eine Siebensegmentanzeige zum Einsatz kommen kann, mit der Zahlenwerte, wie Temperaturen, Uhrzeit, ohne Schwierigkeiten wiedergegeben werden können. Es ist auch eine akustische Anzeige möglich, mit der Informationen über einen Signalton oder eine Signaltonfolge ausgegeben werden kann. Die Anzeige kann aktiviert werden, wenn eine Person sich nähert, und wird im Sinne einer Nachhaltigkeit deaktiviert, wenn sich die Person entfernt.

Nach einer bevorzugten Ausführungsform dient ein Bereich des mobilen Gerätes zur Anzeige von gebäudebezogenen Parametern und Information über gebäudeinterne Abläufe.

Weiter wird die Übertragung des zumindest einen Befehls durch Berührung und/oder Gestik des Benutzers ausgelöst.

Nach der Erfindung ist vorgesehen, dass die sensitive Fläche und das mobile Gerät über eine Funkverbindung kommunizieren. Dies kann eine Nahbereichsfunkverbindung, wie Bluetooth sein, aber auch eine Fernbereichsfunkverbindung.

Das mobile Gerät ist ein Smartphone, das auch eine Kamerafunktion umfasst. Die Kamerafunktion kann vielfältig genutzt werden. Sie kann eine berührungslose Gestik des Benutzers, wie Winken oder Schulterzucken, erfassen und an die Schnittstelle übertragen. Auch kann durch Anwendungssoftware organisiert werden, dass, sobald über die Kamera des Smartphones die sensitive Fläche erfasst und identifiziert ist,

Information von der Schnittstelle übertragen und auf dem Display des Smartphone angezeigt werden.

Ferner ist vorgesehen, dass ein Passwort durch das mobile Gerät, das von diesem als Bitfolge an die sensitive Fläche übertragen worden ist, die Inbetriebnahme der sensitiven Fläche auslöst. Die Bitfolge kann zum Beispiel Lichtsignale umfassen, jedoch sind auch akustische Signale denkbar. Die Lichtsignale können durch die Blitzfunktion der Kamera eines Smartphones realisiert werden.

Das System ist weiter bevorzugt dadurch gekennzeichnet, dass es eine Mehrzahl von Sensoren aufweist, die Informationen über gebäudebezogene Parameter, wie Temperatur und Helligkeit, aufnehmen und an die Verarbeitungslogik der sensitiven Fläche weiterleiten.

Weiter kann das System so gestaltet sein, dass die sensitive Fläche einen mit der Verarbeitungslogik gekoppelten Sender aufweist, der das mobile Gerät mit gebäudebezogenen Parametern und/oder mit Informationen über gebäudeinterne Abläufe speist.

Auch kann vorgesehen sein, dass das mobile Gerät eine Kamerafunktion enthält, die es für die Datenübertragung nutzt.

Im Folgenden soll die Erfindung anhand der beigefügten Zeichnung näher erläutert werden. Es zeigt:
- Figur 1: eine schematische Darstellung einer stationären sensitiven Fläche und eines mobilen Gerätes;
- Figur 2: ein Ablaufdiagramm, das das Konfigurieren und Bedienen des erfindungsgemäßen Systems und die diversen Informationsmöglichkeiten erläutern soll;
- Figur 3: eine Eingabemöglichkeit direkt auf die sensitive Fläche;
- Figur 4: eine Eingabemöglichkeit über das mobile Gerät; und
- Figur 5: diverse Anzeigemöglichkeiten an der sensitiven Fläche und am mobilen Gerät.

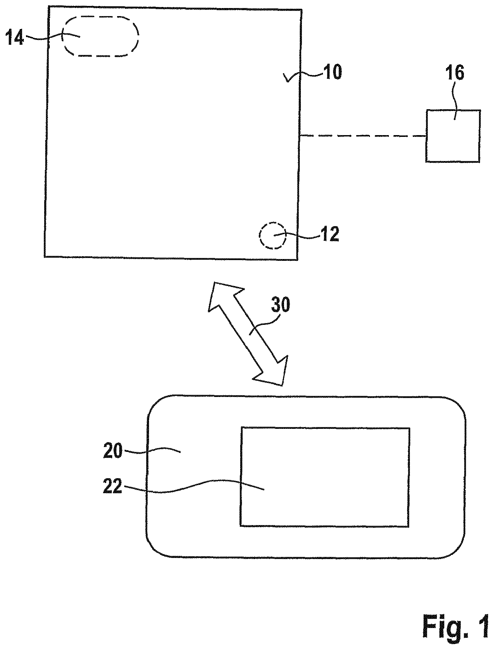

Figur 1 zeigt in schematischer Weise eine sensitive Fläche 10, die im Zusammenwirken mit einer Verarbeitungslogik 16 eine stationäre Schnittstelle für die Kommunikation zwischen einem Benutzer und einem Netzwerk, in dem mindestens ein Gerät, das gebäudeinterne Abläufe verwaltet und abarbeitet, dient. Die Verarbeitungslogik 16 nimmt direkt oder indirekt zumindest einen Befehl auf, welcher das wenigstens eine Gerät ansteuern soll, und verarbeitet ihn. Eine weitere Komponente des erfindungsgemäßen Systems bildet ein mobiles Gerät 20, das beispielsweise ein Smartphone sein kann. Das mobile Gerät 20 wird verwendet, um zumindest einen Teil der Konfiguration des Systems drahtlos vorzunehmen. Das mobile Gerät 20 umfasst einen Bereich 22, über den Befehle eingegeben werden können und auf dem Information darstellbar ist, beispielsweise den berührungsempfindlichen Bildschirm eines Smartphones. Die sensitive Fläche 10 und das mobile Gerät 20 kommunizieren über eine Funkverbindung 30, beispielsweise Bluetooth oder WLAN.

Die sensitive Fläche 10 kann beispielsweise in eine Gebäudewand integriert oder auf ihr aufgebracht sein. Dabei sind diverse Designmöglichkeiten gegeben, die in Figur 1 gewählte Darstellung als quadratische sensitive Fläche 10 ist dabei nur eine von vielen Ausgestaltungen, so dass Gestaltungsmöglichkeiten gegeben sind, mit denen die sensitive Fläche 10 an die Raumsituation oder an die Bedürfnisse des Benutzers angepasst werden kann. Insbesondere kann dem Wunsch nach einem minimalistischen Design Rechnung getragen werden.

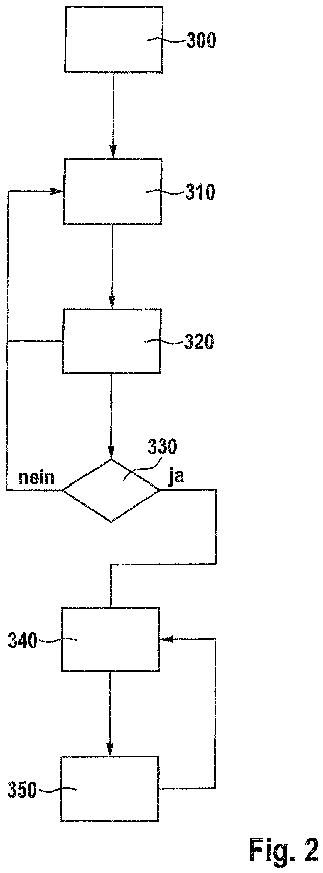

Figur 2 zeigt ein stark vereinfachtes Ablaufdiagramm für den Betrieb eines Systems der Gebäudeautomatisierung gemäß der vorliegenden Erfindung. Im Schritt 300 erfolgt die Inbetriebnahme der stationären Schnittstelle über die sensitive Fläche 10 (Figur 1), beispielsweise über einen Schalter, der als Bereich 12 der sensitiven Fläche 10 ausgebildet ist, oder über das mobile Gerät 20, das für die Freigabe beispielsweise sein WLAN-Passwort als Bitfolge an die sensitive Fläche 10 überträgt, wodurch die Inbetriebnahme der sensitiven Fläche 10 ausgelöst wird. Im Schritt 310 wird das System konfiguriert, wobei die Konfiguration je nach Komplexität direkt auf der sensitiven Fläche 10 vorgenommen werden kann, vorzugsweise aber über eine geeignete Anwendungssoftware von mobilen Gerät 20 aus, auf dessen berührungsempfindlichen Bildschirm 22 die gewählte Konfiguration angezeigt werden kann, beispielsweise durch die bei Smartphones übliche Visualisierung. Einfache Information, beispielsweise eine gewählte Temperatur, kann auch durch eine Anzeige in einem Bereich 14 auf der sensitiven Fläche 10 erfolgen, wobei hier neben der Visualisierung, beispielsweise durch Ziffern, auch an ein akustisches Signal gedacht werden kann. Im Schritt 330 wird überprüft, ob die Konfiguration wie gewünscht erfolgt ist. Ist dies nicht der Fall, kehrt der Ablauf zum Schritt 310 zurück. Wenn die Konfiguration korrekt ist, wird das System zu einem Schritt 340 geführt, in dem das System bedient wird, beispielsweise um eine Temperatur zu ändern oder um eine Jalousie hochzufahren oder herunterzufahren. Die Ausführung des Bedienschrittes wird im Schritt 350 überprüft. Auch hier kann beispielsweise eine Visualisierung über die sensitive Fläche 10, insbesondere den Bereich 14, erfolgen, wobei mit der sensitiven Fläche 10 ein Näherungssensor gekoppelt sein kann, so dass die Anzeige nur erfolgt, wenn sich eine Person der sensitiven Fläche 10 nähert.

Als Alternative kann die Information auf dem Bildschirm des mobilen Gerätes 20 angezeigt werden, wobei die Anzeige genau dann erfolgt, wenn eine Kamera des mobilen Gerätes 20 die sensitive Fläche 10 erfasst und identifiziert. Wenn der Benutzer gewisse Parameter ändert, wird das System zum Schritt 340 zurückgeführt.

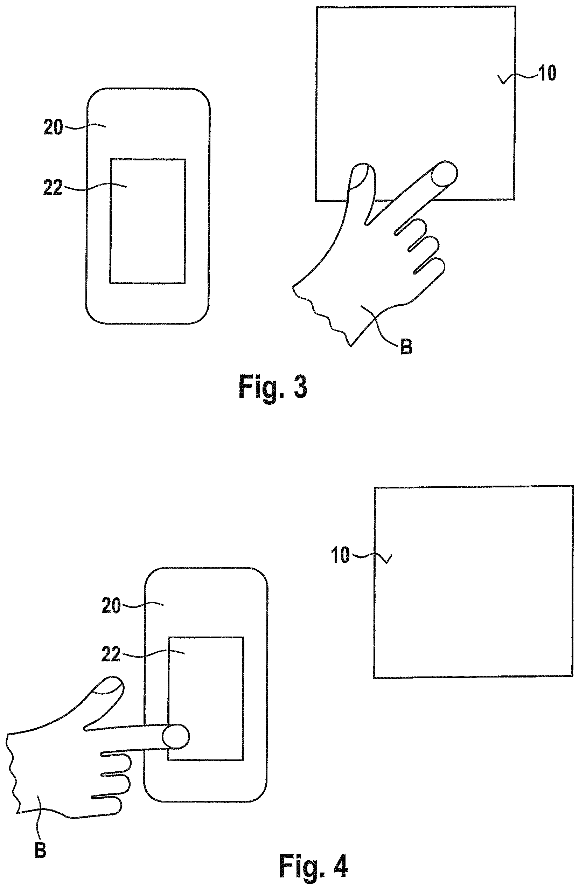

Grundsätzlich soll die Bedienung des Systems durch Gestensteuerung erfolgen, wie es schematisch in den Figuren 3 und 4 veranschaulicht ist. Die Geste, symbolisiert durch die Hand B, kann dabei direkt auf der Oberfläche der sensitiven Fläche 10 ausgeführt werden, beispielsweise sind glasbasierte Multi-Touch-Trackpads bekannt, die Gesten mit bis zu vier Fingern beherrschen. Als Alternative, die in Figur 4 dargestellt ist, wird die Geste auf dem berührungsempfindlichen Bildschirm 22 des mobilen Gerätes 20 durchgeführt. Die Übertragung des dadurch dargestellten Befehls an die hier nicht dargestellte Verarbeitungslogik (16 in Figur 1) geschieht durch eine Funkverbindung.

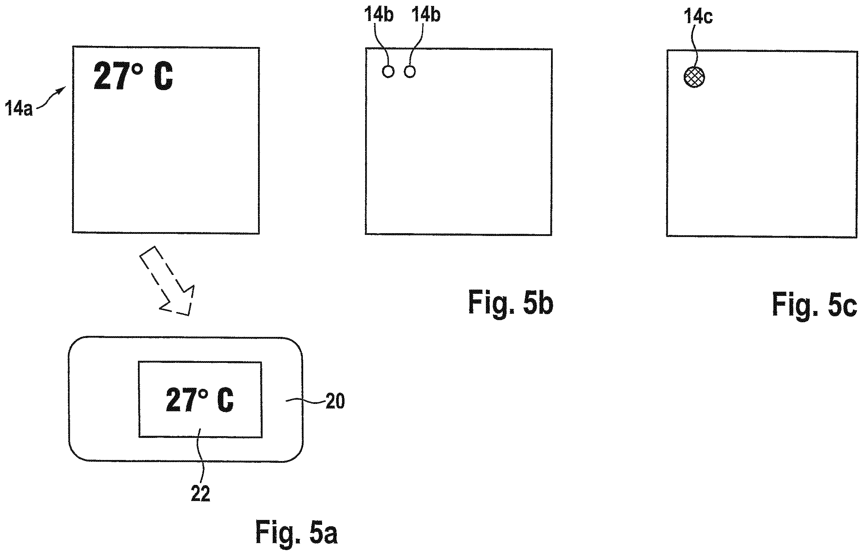

Figur 5 zeigt Varianten, Information auf der sensitiven Fläche 10 darzustellen. Beispielsweise sei das System so eingestellt, dass in einem bestimmten Bereich des Gebäudes eine Temperatur von 27°C herrschen soll. Diese Temperatur wird in einem vergleichsweise kleinen Bereich 14 (Figur 1) auf der sensitiven Fläche 10 angezeigt, in der dargestellten Variante (a) als numerische Anzeige 14a in der linken oberen Ecke. Wie zuvor beschrieben, kann die Information auch auf dem Bildschirm 22 des mobilen Gerätes 20 angezeigt werden, wenn dessen Kamera (nicht gezeigt) das Vorhandensein der sensitiven Fläche 10 erfasst. Eine weitere Möglichkeit ist es, verschiedene Zustände von Geräten im Gebäude über LEDs anzuzeigen, wobei, wie in der Variante (b), entweder mehrere LEDs 14b in die sensitive Fläche 10 integriert sind oder nur eine LED verwendet wird, die beispielsweise durch Blinken oder durch Farbwechsel eine Zustandsänderung anzeigt. Als weitere Möglichkeit kann nach Variante (c) ein miniaturisierter Lautsprecher 14c in die sensitive Fläche 10 integriert sein, so dass eine akustische Ausgabe des Zustandes möglich wird.

Insgesamt bietet die Erfindung ein einfaches, jedoch komfortables System der Gebäudeautomatisierung, das durch sein schlichtes Design besticht. Der Benutzer sieht lediglich die sensitive Fläche, die den optischen Eindruck einer Einbausituation nur wenig unterbricht. Die Erfindung vereint dabei das Bedienen, Visualisieren, Konfigurieren und Informieren auf einer neuen Abstraktionsebene.

## Patentansprüche

1. System der Gebäudeautomatisierung, mit
- einer stationären Schnittstelle für die Kommunikation zwischen einem Benutzer und einem Netzwerk, in dem mindestens ein Gerät, das gebäudeinterne Abläufe verwaltet und abarbeitet, enthalten ist,
wobei die stationäre Schnittstelle eine sensitive Fläche (10) und eine Verarbeitungslogik (16) umfasst, die dazu eingerichtet ist, direkt oder indirekt zumindest einen Befehl aufzunehmen und zu verarbeiten, welcher das wenigstens eine Gerät ansteuert, und wobei gekoppelt mit der sensitiven Fläche (10) eine Anzeige- und/oder Informationseinrichtung (14) vorgesehen ist,
wobei die sensitive Fläche (10) in eine Gebäudewand integriert oder auf ihr aufgebracht ist, wobei das System weiterhin ein mobiles Gerät (20) aufweist und dazu eingerichtet ist, dass zumindest ein Teil der Konfiguration des wenigstens einen Gerätes drahtlos über das mobile Gerät (20) im Zusammenwirken mit der stationären Schnittstelle erfolgt,
**dadurch gekennzeichnet, dass** das mobile Gerät (20) ein Smartphone ist, das eine Kamerafunktion aufweist, welche dazu eingerichtet ist, eine berührungslose Gestik des Benutzers zu erfassen und zumindest einen durch die Gestik dargestellten Befehl über eine Funkverbindung an die stationäre Schnittstelle zu übertragen, wobei die Übertragung des zumindest einen Befehls durch die Gestik des Benutzers ausgelöst ist.

2. System nach Anspruch 1, **dadurch gekennzeichnet, dass** zumindest ein Teil der Konfiguration eine vom Benutzer selbst bestimmte Bedienungslogik umfasst.

3. System nach Anspruch 1, **dadurch gekennzeichnet, dass** ein Bereich (22) des mobilen Gerätes (20) zur Anzeige von gebäudebezogenen Parametern und Information über gebäudeinterne Abläufe dient.

4. System nach Anspruch 1, **dadurch gekennzeichnet, dass** es weiterhin dazu eingerichtet ist, dass ein Passwort des mobilen Gerätes (20), das von diesem als Bitfolge an die Schnittstelle übertragen worden ist, die Inbetriebnahme der sensitiven Fläche (10) auslöst.

5. System nach Anspruch 1, **dadurch gekennzeichnet, dass** es eine Mehrzahl von Sensoren aufweist, die Information über gebäudebezogene Parameter, wie Temperatur und Helligkeit, aufnehmen und an die Verarbeitungslogik (16) der Schnittstelle und/oder das mobile Gerät (20) weiterleiten.

6. System nach einem der Ansprüche 2 bis 3, **dadurch gekennzeichnet, dass** die sensitive Fläche (10) einen mit der Verarbeitungslogik (16) gekoppelten Sender aufweist, der das mobile Gerät mit gebäudebezogenen Parametern und/oder mit Information über gebäudeinterne Abläufe speist.

## Claims

1. A building automation system, with
- a stationary interface for communication between a user and a network, which includes at least one device that manages and processes in-building processes,
wherein the stationary interface comprises a sensitive surface (10) and processing logic (16) adapted to directly or indirectly receive and process at least one command that controls the at least one device, and wherein a display and/or information device (14) is provided coupled to the sensitive surface (10),
wherein the sensitive surface (10) is integrated into or applied to a building wall, the system further comprising a mobile device (20) and being arranged for at least part of the configuration of the at least one device to be performed wirelessly via the mobile device (20) in cooperation with the stationary interface,
**characterized in that** the mobile device (20) is a smartphone having a camera function configured to detect a non-contact gesture of the user and to transmit at least one command represented by the gesture to the stationary interface via a radio link, wherein the transmission of the at least one command is triggered by the gesture of the user.

2. The system according to claim 1, **characterized in that** at least part of the configuration comprises an operating logic determined by the user himself.

3. The system according to claim 1, **characterized in that** an area (22) of the mobile device (20) is used to display building-related parameters and information about building-internal processes.

4. The system according to claim 1, **characterized in that** it is further arranged for a password of the mobile device (20), which has been transmitted by the mobile device as a bit sequence to the interface, to trigger the start-up of the sensitive area (10).

5. The system according to claim 1, **characterized in that** it comprises a plurality of sensors that pick up information about building-related parameters, such as temperature and brightness, and transmit it to the processing logic (16) of the interface and/or the mobile device (20).

6. The system according to any one of claims 2 to 3, **characterized in that** the sensitive area (10) has a transmitter coupled to the processing logic (16) that feeds the mobile device with building-related parameters and/or with information about building-internal processes.

## Revendications

1. Système de domotique avec
- une interface stationnaire pour la communication entre un utilisateur et un réseau, dans lequel se trouve au moins un appareil qui gère et traite des processus internes au bâtiment,
dans lequel l'interface stationnaire comprend une surface sensible (10) et une logique de traitement (16) qui est conçue pour enregistrer et traiter, de manière directe ou indirecte, une instruction qui contrôle l'au moins un appareil et dans lequel est prévu, couplé avec la surface sensible (10), un dispositif d'affichage et/ou d'information (14),
dans lequel la surface sensible (10) est intégrée dans un mur du bâtiment ou est monté sur celui-ci, dans lequel le système comprend en outre un appareil mobile (20) et est conçu de façon à ce qu'au moins une partie de la configuration de l'au moins un appareil ait lieu sans fil par l'intermédiaire de l'appareil mobile (20) en interaction avec l'interface stationnaire,
**caractérisé en ce que** l'appareil mobile (20) est un smartphone qui comprend une fonction de caméra qui est conçue pour détecter une gestuelle sans contact de l'utilisateur et pour transmettre au moins une instruction représentée par la gestuelle par l'intermédiaire d'une liaison radio à l'interface stationnaire, dans lequel la transmission de l'au moins une instruction est déclenchée par la gestuelle de l'utilisateur.

2. Système selon la revendication 1, **caractérisé en ce qu'**au moins une partie de la configuration présente une logique de commande déterminée par l'utilisateur lui-même.

3. Système selon la revendication 1, **caractérisé en ce qu'**une partie (22) de l'appareil mobile (20) sert d'affichage de paramètres concernant le bâtiment et à l'information concernant des processus internes au bâtiment.

4. Système selon la revendication 1, **caractérisé en ce qu'**il est en outre conçu de façon à ce qu'un mot de passe de l'appareil mobile (20), qui a été transmis par celui-ci sous la forme d'une séquence binaire, à l'interface, déclenche la mise en service de la surface sensible (10).

5. Système selon la revendication 1, **caractérisé en ce qu'**il comprend une pluralité de capteurs qui enregistrent des informations concernant les paramètres concernant le bâtiment, comme la température et la luminosité et les transmettent à la logique de traitement (16) de l'interface et/ou à l'appareil mobile (20).

6. Système selon l'une des revendications 2 à 3, **caractérisé en ce que** la surface sensible (10) comprend un émetteur couplé avec la logique de traitement (16), qui alimente l'appareil mobile avec des paramètres concernant le bâtiment et/ou des informations concernant les processus internes au bâtiment.
